# EUROPÄISCHE PATENTSCHRIFT

(11) **EP 1 357 063 B1**
(45) Veröffentlichungstag und Bekanntmachung des Hinweises auf die Patenterteilung: **30.03.2005**
(21) Anmeldenummer: 03008716.7
(22) Anmeldetag: 15.04.2003
(51) Int. Cl.: B65G 47/14, B65G 47/84, B65B 35/16

(54) **Einrichtung und Verfahren zum Vereinzeln kleinstückiger Artikel**
Device and method for singulating small objects
Dispositif et procédé de singularisation de petits objets

(30) Priorität: 22.04.2002 DE 10217898
(43) Veröffentlichungstag der Anmeldung: 29.10.2003
(73) Patentinhaber: THEEGARTEN-PACTEC GMBH & CO. KG, 01237 Dresden (DE)
(72) Erfinder: Liebscher, Harald, 01237 Dresden (DE); Schibalski, Ralf, 01129 Dresden (DE); Wehner, Gerd, 01328 Dresden (DE)
(74) Vertreter: Grünecker, Kinkeldey, Stockmair & Schwanhäusser Anwaltssozietät

(56) Entgegenhaltungen:
- EP-A- 1 050 508
- DE-A- 19 502 562
- GB-A- 1 432 371

## Beschreibung

Die Erfindung betrifft eine Vereinzelungseinrichtung einer Vorrichtung zum Verpacken kleinstückiger Artikel mit einem um eine Tellerdrehachse drehbaren Vereinzelungsteller und einem um eine Entnahmeraddrehachse drehbaren Entnahmerad, an dem eine Mehrzahl von Entnahmeeinheiten mit jeweils zumindest zwei um jeweils eine Greiferhebelachse schwenkbaren Greiferhebeln angeordnet sind, wobei an deren freien Ende jeweils eine Greiferbacke zum Aufnehmen des Artikels vorgesehen ist.

Daneben betrifft die Erfindung ein Verfahren zum Vereinzeln von kleinstückigen Artikeln mit folgenden Schritten: Zuführen einer Vielzahl von Artikeln zu einem sich drehenden Vereinzelungsteller, einsortieren einzelner Artikel in an einem Randbereich des Vereinzelungstellers ausgebildeten Aufgaberingtaschen und entnehmen der einsortierten Artikel aus den Aufgaberingtaschen durch schwenkbar an Entnahmeeinheiten angeordnete Greifefiebel, wobei die Entnahmeeinheiten an einem um eine Entnahmeraddrehachse drehbaren Entnahmerad angeordnet sind.

Überall dort, wo eine Vielzahl gleichartiger Artikel einzeln verpackt werden sollen, ergibt sich die Notwendigkeit, effektive Verpackungsvorrichtungen und Verfahren zur Verfügung zu stellen, mit deren Hilfe auch große Mengen einzelner zu verpackender Artikel in kurzer Zeit verpackt bzw. eingewickelt werden können.

Hierzu ist es jedoch erforderlich, die meist ungeordnet von einer Produktionsstelle angelieferten Artikel zu vereinzeln und auszurichten, um sie sodann in einem weiteren Schritt einzeln verpacken zu können.

Zur Durchführung einer solchen Vereinzelung ist eine Vereinzelungseinrichtung der eingangs genannten Art von der Anmelderin entwickelt worden. Diese herkömmliche Vereinzelungseinrichtung wird im folgenden anhand der Fig. 4 näher beschrieben werden. Siehe z.B. auch Figur 1 aus dem Dokument DE 195 02 562 A.

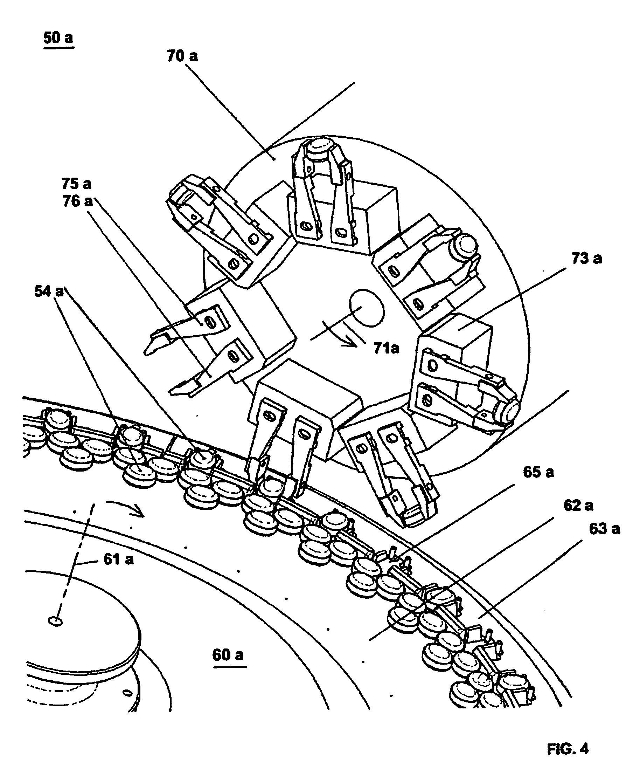

Fig. 4 zeigt eine Vereinzelungseinrichtung 50a als Teil einer Verpackungsmaschine zum Verpacken kleinstückiger Artikel. Beispiele solcher kleinstückiger Artikel oder Produkte, die in der Fig. 4 mit dem Bezugszeichen 54a bezeichnet sind, sind Drops, Hartkaramellen, Kaugummis, Tabletten oder ähnliche Produkte aus dem Genußmittelbereich oder anderen Warenbereichen.

Bei der in der Fig. 4 gezeigten Vereinzelungseinrichtung gelangen die Artikel 54a über eine (nicht dargestellte) Zuführ- und Sortiervorrichtung, insbesondere über eine Rinne oder Rutsche, die auch eine Produktkontrollvorrichtung umfassen kann, auf einen um eine Tellerdrehachse 61a drehbaren (ca. 220 U/min) Vereinzelungsteller 60a. Der Vereinzelungsteller besteht aus einer inneren Vereinzelungsscheibe 62a und einem äußeren Aufgabering 63a.

Von der inneren Vereinzelungsscheibe gelangen die Artikel durch Fliehkraftwirkung in einzelne Aufgabetaschen 65a, die am Aufgabering 63a ausgebildet sind. Dabei liegen die Artikel radial ausgerichtet in den Aufgabetaschen 65a.

Von dort werden die Artikel 54a von (bei der in der Fig. 4 gezeigten Ausführungsform sieben) Entnahmeeinheiten 73a, die jeweils mit einem Paar von Greiferhebeln 75a,76a ausgestattet sind, entnommen und an eine weitere Transportvorrichtung der Verpackungsvorrichtung für kleinstückige Artikel weitergereicht. Die Entnahmeeinheiten 73a sind hierbei schwenkbar an einem um eine Entnahmeraddrehachse 71a drehbaren Entnahmerad 71 mit vergleichsweise kleinem Durchmesser ringförmig locker beabstandet voneinander angeordnet. Die Einzelachsen der Greifhebel sind hierbei auf demselben Teilkreis liegend (bzgl. der Entnahmeraddrehachse 71 a) nebeneinander angeordnet.

Wie aus Fig. 4 ersichtlich, sind hierbei das Entnahmerad 70a und der Vereinzelungsteller 60a so aufeinander abgestimmt, daß aus jeder zweiten Aufgaberingtasche 65a entlang des Umfangs des Vereinzelungstellers 60a ein Artikel 54a entnommen wird. Demzufolge sind erst nach 2 Umläufen alle Taschen einmal entleert. Hierdurch sind Vereinzelungs- bzw. Entnahmegeschwindigkeiten von maximal 1800 Artikeln pro Minute erreichbar. Jedoch ergibt sich aufgrund der hohen Umfangsgeschwindigkeiten des Aufgaberings 63a und der Vereinzelungsscheibe 62a eine starke Beanspruchung der Artikel, die darüber hinaus leistungsbegrenzend wirkt.

Daneben offenbart die EP 1 050 508 A1 ein Transfer-Rad daran direkt angeordneten, beweglichen Greifern zum Überführen von Flaschen, wobei die Greifer unterschiedliche Längen aufweisen.

Der Erfindung liegt daher die Aufgabe zugrunde, eine Vereinzelungseinrichtung sowie ein Verfahren zum Vereinzeln von kleinstückigen Artikeln der eingangs genannten Art dahingehend zu verbessern, daß die Vereinzelungsgeschwindigkeit bei gleichzeitiger Reduktion der Produktbelastung weiter erhöht wird.

Für eine Vereinzelungseinrichtung der eingangs genannten Art wird diese Aufgabe erfindungsgemäß dadurch gelöst, daß jede Entnahmeeinheit 73 einen drehfest mit ihrer Entnahmeschwenkachse 72 verbundenen Grundkörper 83 aufweist, an dem ein Paar von Greiferhebein 75,76 drehbeweglich angeordnet ist, und daß ein Abstand zwischen der Greiferbacke und der Greiferhebelachse bei den einzelnen Greiferhebeln unterschiedlich groß ausgebildet ist.

Des weiteren wird diese Aufgabe für ein Verfahren zum Vereinzeln von kleinstückigen Artikeln erfindungsgemäß dadurch gelöst, daß die Entnahmeeinheiten vor und nach dem Entnahmeschritt um eine zur Entnahmeraddrehachse parallele Entnahmeschwenkachse relativ zu dem Entnahmerad verdreht werden.

Dies führt erfindungsgemäß dazu, daß nicht nur mehr, wie herkömmlich, jeder zweite Artikel aus den Taschen am Rand des Vereinzelungstellers entnommen werden kann, sondern daß alle Artikel der Reihe nach aus den Taschen des Ausgaberings entnommen werden können. Hierbei ergibt sich ein hoher (guter) Füllgrad, d.h. praktisch (über 99%), jede Tasche ist vor dem Entnahmeschritt mit einem Artikel gefüllt.

Durch die erfindungsgemäße Ausbildung der Entnahmeeinheiten können die Greiferhebelachsen in ihrer Normalstellung radial (strahlenförmig) bezüglich der zentralen Entnahmeraddrehachse angeordnet werden, und so der Greiferabstand zwischen zwei benachbarten Entnahmeeinheiten verringert werden, so daß auch die Entnahme benachbarter Artikel aus benachbarten Taschen des Aufgaberings möglich wird.

Darüber hinaus kann die Anzahl der Entnahmeeinheiten (bisher 7 Stück), die an dem Entnahmerad angeordnet sind, zusätzlich vorzugsweise auf 10, erhöht werden. Von dem Entnahmerad werden die Artikel vorzugsweise an weitere rotierende Köpfe bzw. Fördereinrichtungen, z.B. Packmaterialzuführkopf, Packkopf etc. weitergegeben. Diese Köpfe weisen vorzugsweise 10 Artikelaufnahme- bzw. Halteeinrichtungen auf, so daß diese Köpfe und das Entnahmerad mit gleichen Drehzahlen arbeiten.

Aufgrund der Tatsache, daß jeder Artikel entnommen wird, liegt die Umfangsgeschwindigkeit des Aufgaberings und der Vereinzelungsscheibe wesentlich niedriger, so daß die Beanspruchung der Artikel erheblich reduziert wird. Durch die erfindungsgemäße Anordnung ist es daher möglich, einen wesentlichen Leistungssprung von ca. 1800 auf 2300 vereinzelte Artikel pro Minute und darüber hinaus zu vollziehen. Gleichzeitig wird die Artikel- bzw. Produktbelastung auch bei höheren Arbeitstaktzahlen entsprechend reduziert.

Hierbei ist gemäß dem Stand der Technik der Durchmesser des Aufgaberinges (und der Vereinzelungsscheibe) vergrößert, so daß selbst bei gleichbleibender Drehzahl die Umfangsgeschwindigkeit zunimmt, was zu einer Durchsatzsteigerung führt.

Vorteilhaft wirkt sich hierbei aus, daß zwischen der inneren Vereinzelungsscheibe und dem äußeren Aufgabering des Vereinzelungstellers eine Drehzahldifferenz in der Umlaufgeschwindigkeit besteht, wobei die Drehzahldifferenz erfindungsgemäß stufenlos einstellbar ist.

Die Vereinzelungsscheibe dreht sich hierbei jedoch immer schneller als der Aufgabering. Durch die erfindungsgemäß stufenlos einstellbare Drehzahldifferenz ergibt sich auch die Möglichkeit, den Tellerfüllungsgrad entsprechend der zu vereinzelnden Produkte und ihrer Eigenschaften hinsichtlich Konsistenz und Geometrie zu optimieren, und so je nach Produkt ein optimales Einsortieren in die Taschen des Aufgaberings zu ermöglichen.

Vorzugsweise drehen sich Aufgabering und Entnahmerad mit gleicher Umfangsgeschwindigkeit, was zu einer Leistungserhöhung gegenüber früher von 500 Artikel/min führt. Hierdurch kann eine kleine weitere Maschine eingespart werden.

Eine weitere Optimierung kann dadurch erreicht werden, daß die Entnahmeeinheiten um eine weitere zur jeweiligen Entnahmeschwenkachse senkrechten Achse drehbar angeordnet sind, so daß auch eine Berücksichtigung der auf einer Kreisbahn angeordneten Aufgaberingtaschen beim Entnahmevorgang berücksichtigt werden kann.

In einer bevorzugten Ausführungsform der Erfindung sind die Entnahmeeinheiten im wesentlichen ringförmig an einer zur Entnahmeraddrehachse normalen Stirnseite des Entnahmerades angeordnet, wobei diese vorzugsweise als offene Konstruktion ausgebildet sind, um so die Wartung und Reinigung zu erleichtern.

Vorzugsweise ist hierbei jede der vorzugsweise 10 Entnahmeeinheiten so ausgebildet, daß sie einen drehfest mit ihrer Entnahmeschwenkachse verbundenen Grundkörper aufweist, an dem ein Paar von Greiferhebeln drehbeweglich angeordnet ist. Das Paar von Greiferhebeln ist in einer Ebene normal zur Entnahmeradschwenkachse verschwenkbar, wobei die Greiferhebel unterschiedlich lang ausgebildet sind. Die Drehpunkte der Greifhebel liegen daher übereinander.

In der beschriebenen bevorzugten Ausführungsform sind die Grundkörper benachbarter Entnahmeeinheiten in einer Drehstellung des Entnahmerades, bei der sich die Entnahmeeinheiten nahe an dem Vereinzelungsteller befinden, im wesentlichen parallel ausgerichtet. Hierbei sind die Grundkörper benachbarter Entnahmeeinheiten vorzugsweise in einer Drehstellung des Entnahmerades, bei der sich die Entnahmeeinheiten nahe an dem Vereinzelungsteller befinden, im wesentlichen vertikal zur Oberfläche des Vereinzelungstellers ausgerichtet.

Hingegen sind die Grundkörper in einer Drehstellung des Entnahmerades, bei der die Entnahmeeinheit in einem entfernten Bereich bezüglich des Vereinzefungstellers befinden, radial bzw. strahlenförmig bezüglich der Entnahmeraddrehachse ausgerichtet.

Bei einer derartigen Anordnung sind in benachbarten Aufgaberingtaschen des Aufgaberings angeordnete Artikel durch benachbarte Entnahmeeinheiten des Entnahmerades aufnehmbar. Hierbei ist die Drehgeschwindigkeit des Aufgaberinges und die Drehgeschwindigkeit des Entnahmerades aufeinander abgestimmt (vorzugsweise gleich groß). Die Anordnungsdichte der Greifhebel am Entnahmerad wird vorzugsweise dadurch erhöht, daß dessen Durchmesser vergrößert wird und die Artikelaufnahmeeinheiten kompakter (übereinanderliegende Greifhebeldrehachsen) ausgebildet werden.

In einer bevorzugten Ausführungsform ist ein erster Greiferhebel mit einem zweiten Greiferhebel einer jeden Entnahmeeinheit über einen Koppelantrieb, insbesondere eine Koppelstange oder eine Zahnradverbindung, entgegengesetzt drehbeweglich um die jeweiligen Greiferhebelachsen verbunden.

In einer weiteren bevorzugten Ausführungsform sind die Tellerdrehachse und die Entnahmeraddrehachse in einer Ebene angeordnet, wobei sich ihre Verlängerungen in einem Schnittpunkt kreuzen.

Weitere Merkmale und Vorteile der Erfindung sind Gegenstand der Unteransprüche, die bevorzugte Ausführungsformen der erfindungsgemäßen Vereinzelungseinrichtung sowie des erfindungsgemäßen Verfahrens zum Vereinzeln kleinstückiger Artikel betreffen.

Die Erfindung wird im folgenden anhand einer schematischen Zeichnung beispielsweise und mit weiteren Einzelheiten erläutert. Darin zeigen:
- Fig. 1: eine schematische Gesamtansicht einer erfindungsgemäßen Vereinzelungseinrichtung,
- Fig. 2: eine Detaildarstellung eines Entnahmerades einer solchen Vereinzelungsvorrichtung,
- Fig. 3: eine Greiferhebelanordnung als Einzelteildarstellung einer Entnahmeeinheit des Entnahmerades, und
- Fig. 4: eine herkömmliche Vereinzelungseinrichtung.

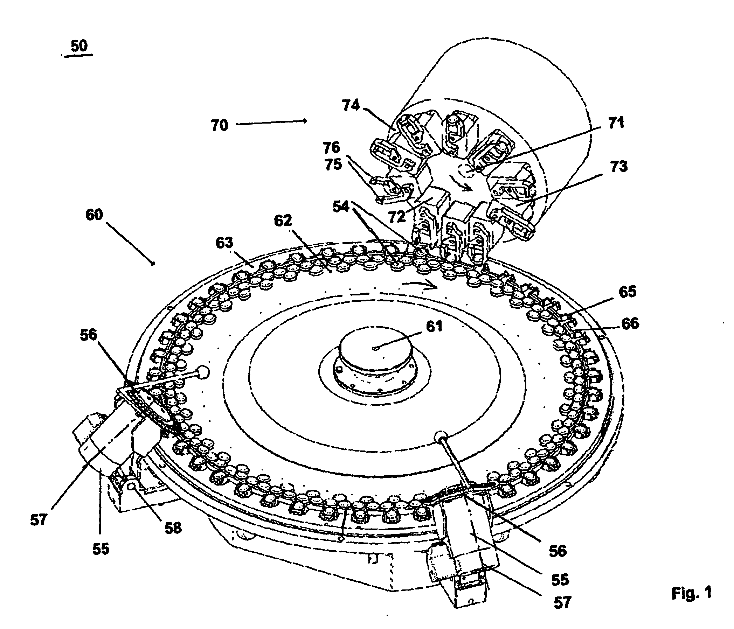

In Fig. 1 ist eine erfindungsgemäße Vereinzelungseinrichtung in einer perspektivischen Gesamtansicht schematisch dargestellt.

Ähnlich der bereits anhand von Fig. 4 beschriebenen herkömmlichen Vereinzelungseinrichtung gelangen die zu vereinzelnden Artikel von einer Produktionsstation über eine Zuführ- und Sortiervorrichtung auf den inneren Bereich des Vereinzelungstellers 60.

Die Zuführvorrichtung weist hierbei vorzugsweise einen Schwing- bzw. Vibrationsförderer auf, der die einzelnen Artikel über nebeneinanderliegende Schüttrinnen auf eine Zuführrinne fördert, an der eine Waage angeordnet ist. Das Zuführgewicht wird mit einer an der Drehachse des Vereinzelungstellers 60 angelenkten Kraftmeßdose abgeglichen und beeinflußt somit die Anzahl der Artikel, die sich jeweils auf dem Teller 60 befinden, so daß Mauerbildungen und Überfüllungen vorgebeugt wird, ebenso wie auch Unterfüllungen.

Der Vereinzelungsteller 60 besteht im wesentlichen aus der inneren Vereinzelungsscheibe 62 und einem äußeren Aufgabering 63. Vereinzelungsscheibe 62 und Aufgabering 63 drehen sich im Betrieb der Vereinzelungseinrichtung 50 mit unterschiedlichen Drehgeschwindigkeiten in der in Fig. 1 durch einen Pfeil markierten Richtung (im Uhrzeigersinn) um die Tellerdrehachse 61.

Durch Fliehkrafteinwirkung gelangen die Artikel, die in Fig. 1 mit dem Bezugszeichen 54 gekennzeichnet sind, von der Vereinzelungsscheibe 62, an deren Rand zu dem Aufgabering 63 hin. An einem inneren Bereich des Aufgaberings 63, an dem dieser an die Vereinzelungsscheibe 62 angrenzt, ist an dem Aufgabering 63 eine Führungswand 66 ringförmig ausgebildet, die verhindert, daß die einzelnen Artikel 54 ungehindert auf den Aufgabering 63 gelangen können.

In der Führungswand 66 sind jedoch in gleichmäßigen Abständen Aussparungen 67 ausgebildet, wodurch ermöglicht wird, daß einzelne Artikel 54 durch die Führungswand 66 in radialer Richtung bezüglich der Tellerdrehachse 61 nach außen hin auf den Aufgabering gelangen können.

Im Bereich jeder Aussparung 67 ist auf dem Aufgabering eine Aufgaberingtasche 65, die im folgenden auch als Tasche bezeichnet wird, ausgebildet. Die Tasche 65 ist jeweils wieder mit Anschlägen bzw. seitlichen und/oder hinteren Halte- bzw. Begrenzungswänden umgeben, die ein Fortbewegen der in den Taschen aufgenommenen Artikel verhindem. Die genannten Begrenzungen der Taschen sind vorzugsweise so ausgebildet, daß sie durch Einwirkung der Artikelaufnahmeeinheiten 73, insbesondere durch ein Zusammenwirken mit den Greiferhebeln 75 und 76 nach unten hin absenkbar sind, so daß ein Aufnehmen der Artikel 54 aus den Taschen 65 nicht durch die seitlichen Taschenbegrenzungen behindert wird.

Im Gegensatz zu der herkömmlichen Vereinzelungseinrichtung 50a, wie sie anhand der Fig. 4 eingangs beschrieben wurde, besitzt der Vereinzelungsteller 60 einen größeren Teilkreisdurchmesser, um die Zeit des Einordnens bzw. Einsortierens der Artikel in die Taschen des Aufgaberings 63 zu vergrößern. Dies führt zu einer größeren Umfangsgeschwindigkeit bei gleichbleibender Drehzahl. Hierdurch werden die Produkte radial ausgerichtet, so daß keine Schubkräfte einzelner Produkte beim Anstauen einer Vielzahl von Produkten (wie bei einer Tangentialausrichtung anderer Vereinzelungsmaschinen) auftreten und die Produktqualität beeinträchtigen kann.

Da die Vereinzelungsscheibe 62 mit einer vorzugsweise 1,5 x höheren Umlaufgeschwindigkeit als der Aufgabering 63 um die Tellerdrehachse 61 umläuft, wird das Einsortieren der Artikel in die Taschen 65 des Aufgaberings 63 erleichtert. Bei der erfindungsgemäßen Vereinzelungseinrichtung 50 ist hierbei die Differenzdrehzahl einstellbar, wobei sich jedoch die Vereinzelungsscheibe 62 immer schneller dreht als der Aufgabering 63. Durch die einstellbare Differenzdrehzahl kann die Optimierung des Tellerfüllungsgrades und das Einsortieren in die Taschen hinsichtlich der Konsistenz und der Geometrie sowie anderen Produkteigenschaften der Artikel angepaßt werden.

Die Differenzgeschwindigkeit zwischen Vereinzelungsscheibe 62 und Aufgabering 63 führt zu einer Scherwirkung an der Führungswand 66, die die anliegenden Artikel 54 zu einer Rotation um ihre Hochachse verhilft, die zu deren glattem Einlaufen in die Aufgaberingtaschen 65 führt.

Das Gewicht des Vereinzelungstellers 60 ist über eine Kraftmeßachse ermittelbar, wodurch die Anzahl der Artikel 54 auf dem Teller 60 feststellbar ist.

In Fig. 1 sind weiterhin (zwei) um tangetiale Achsen schwenkbar gelagerte Störscheibeneinheiten 55 dargestellt, die im Bereich des äußeren Umfangs des Vereinzelungstellers 60 angeordnet sind. Die Störscheibeneinheiten 55 weisen jeweils eine starre Störscheibe 56 auf, die um eine Störscheibendrehachse 57 drehbar angeordnet und über die Führungswand 66 hinweg auf die Vereinzelungsscheibe 62 gerichtet ist. Die Drehzahl der Störscheibe 56 ist ebenfalls entsprechend der Produkteigenschaften einstellbar und verhindert eine Brückenbildung bzw. Auftürmung der Artikel auf der Vereinzelungsscheibe, wodurch der Füllungsgrad erhöht wird. Auch werden die Artikel aufgelockert, so daß sich keine Blockaden vor ungefüllten Taschen bilden können. Die einstellbare Drehzahl der Störscheiben 56 ermöglicht hierbei auch eine bessere Abstimmung zur Umfangsgeschwindigkeit der Produkte auf der Vereinzelungsscheibe.

Vorzugsweise ist der Rand der Störscheibe 56 jeweils so ausgerichtet, daß er im Bereich der äußersten Produktreihe auf der Vereinzelungsscheibe 62 angeordnet ist. Der Abstand des äußeren Randes der Störscheibe 56 zur Oberfläche der Vereinzelungsscheibe 52 bzw. der darauf angeordneten Artikel 54 ist über eine Störscheibenneigeachse 58, die im wesentlichen tangential zum Umfang des Vereinzelungstellers angeordnet ist, einstellbar.

Nachdem die einzelnen Artikel in die Taschen 65 des Aufgaberings 63 fliehkraftbedingt einsortiert worden sind, werden sie von Entnahmeeinheiten 73, die an einer Stirnseite 74 eines Entnahmerades 70 angeordnet sind, aus den Taschen 65 einzeln entnommen und an eine weitere Transport- bzw. Weiterverarbeitungseinrichtung der Verpackungsvorrichtung für kleinstückige Artikel übergeben.

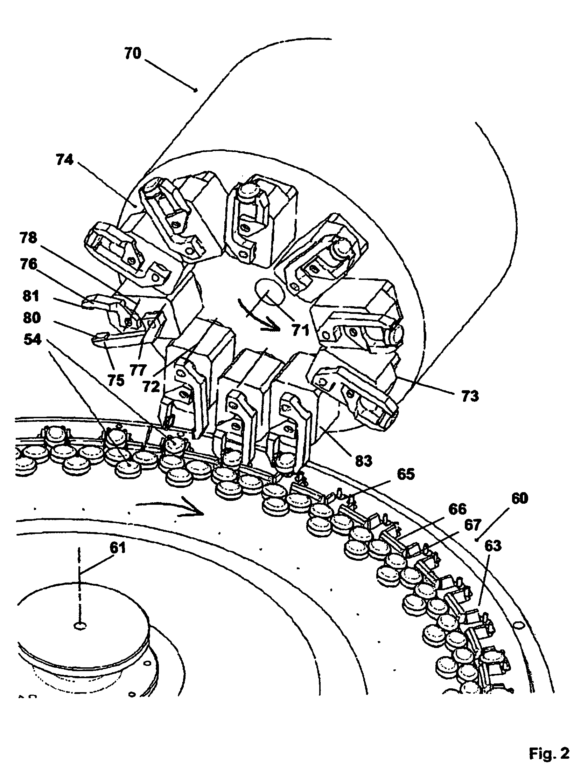

Wie insbesondere aus Fig. 2 ersichtlich, läuft hierbei das Entnahmerad 70 gleichsinnig mit dem Vereinzelungsteller 60 (vgl. Pfeilrichtungen in Fig. 2) um eine Entnahmeraddrehachse 71 kontinuierlich um. Bei der in Fig. 2 dargestellten Ausführungsform sind vorzugsweise 10 Entnahmeeinheiten 73 kreisförmig um die Entnahmeraddrehachse 71 angeordnet, eine andere Anzahl ist jedoch denkbar.

Jede der Entnahmeeinheiten 73 weist hierbei einen Grundkörper 83 auf, der um eine Entnahmeschwenkachse 72 gegenüber dem Entnahmerad 70 dreh- bzw. schwenkbar ist. Die Entnahmeschwenkachse 72 ist hierbei parallel zur Entnahmeraddrehachse 71 ausgebildet. Jede Entnahmeeinheit 73 umfaßt weiterhin ein Paar von Greiferhebeln 75,76, die jeweils um eine erste Greiferhebelachse 77 bzw. um eine zweite Greiferhebelachse 78 schwenkbar sind. Die Greiferhebelachsen 77,78 sind hierbei wiederum parallel zur Entnahmeschwenkachse 72 ausgebildet. Die Entnahmeeinheiten 73, insbesondere die Grundkörper 83 sind vorzugsweise staub- und wasserdicht und schmutzabweisend gekapselt, was Wartung und Reinigung erleichert.

Um eine möglichst enge Anordnung der einzelnen Entnahmeeinheiten 73 nebeneinander zu ermöglichen, und um so zu erreichen, daß Artikel aus benachbarten Aufgaberingtaschen 65 entnommen werden können, sind der erste Greiferhebel 75 und der zweite Greiferhebel 76 unterschiedlich lang ausgebildet, so daß ihre Drehachsen nicht nebeneinander sondern übereinander (radial bzw. strahlenförmig zur Entnahmeraddrehachse) liegen.

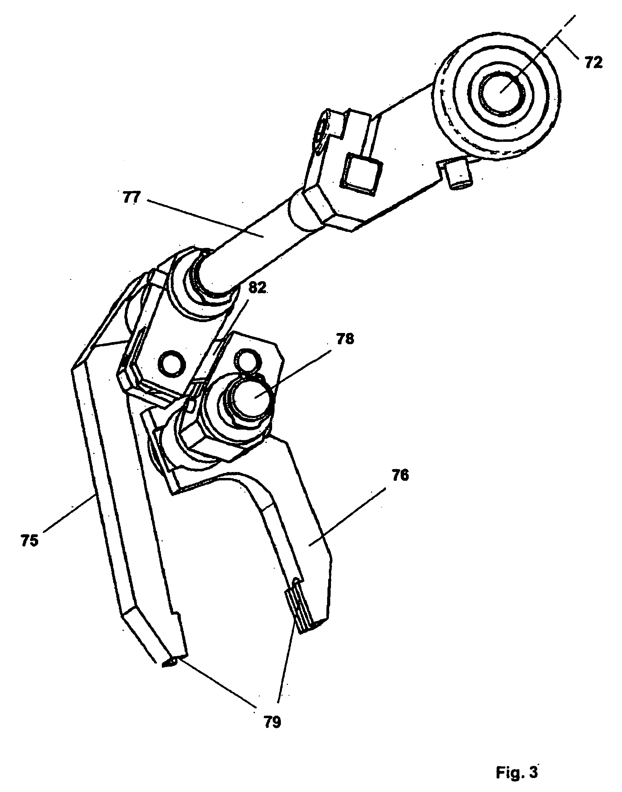

Hierbei sind die Greiferhebel 75,76 ausgebildet, daß sie an einem ihrer beiden Enden (das Ende, das der Entnahmeraddrehachse 71 zugewandt ist) jeweils an einer Greiferhebelachse 77,78 drehfest angeordnet sind. Am jeweils anderen Ende (freies Ende der Greiferhebel 75,76) ist jeweils eine Greiferbackenaufnahmeeinrichtung 79 ausgebildet (vgl. Fig. 3).

Wie in Fig. 2 dargestellt, ist an der Greiferbackenaufnahmeeinrichtung 79 des ersten Greiferhebels 75 eine erste Greiferbacke 80 befestigbar und, ihr gegenüberliegend, an der Greiferbackenaufnahmeeinrichtung 79 des zweiten Greiferhebels 76 eine zweite Greiferbacke 81 befestigbar, die bei der Aufnahme und Halterung der Artikel 54 zusammenwirken und jeweils an die Artikelgestalt angepaßt sind. Die Länge und Anordnung der Grefferhebel 75,76 ist hierbei so ausgebildet, daß der Abstand des jeweiligen freien Endes des ersten Greiferhebels 75 und des zweiten Greiferhebels 76 zur ersten Greiferhebeldrehachse 77 des längeren ersten Greiferhebels 75 gleich ist. Hierdurch wird sichergestellt, daß trotz der unterschiedlichen Länge der Greiferhebel 75,76 ein sicheres Greifen der Artikel 54 erfolgt.

Wie aus Fig. 3 ersichtlich, sind die beiden Greiferhebel 75,76 über ein Kopplungselement 82, insbesondere eine Koppelstange, miteinander drehbeweglich verbunden. Hierbei greift die Kopplungsstange 82 an einem jeweils mit dem jeweiligen Hebel drehfest verbundenen Hebelfortsatz an, so daß eine Schwenkbewegung des ersten Greiferhebels 75 um die erste Greiferhebelachse 77 über die Kopplung der Koppelstange 82 eine entgegengesetzte Schwenkbewegung des zweiten Greiferhebels 76 um die zweite Greiferhebelachse 78 bewirkt. Hierdurch ergibt sich ein im wesentlichen gleichmäßiges Auseinanderschwenken der beiden Greiferbacken 80,81 an dem freien bzw. entfernten Ende der Greiferhebel 75,76, wozu nur ein Verdrehen der ersten Greiferhebelachse 77 erforderlich ist. Die erste Greiferhebelachse 77 und die zweite Greiferhebelachse 78 sind in einer Ebene mit der Entnahmeschwenkachse 72 einer Entnahmeeinheit 73 ausgebildet.

Wie in Fig. 3 in einer bevorzugten Ausführungsform dargestellt, ist es hierbei auch denkbar, daß die Entnahmeschwenkachse 72 im wesentlichen als Hohlwelle bzw. rohrförmige Drehachse ausgebildet ist, deren Mittellinie auf einer Linie mit der Mittellinie der ersten Greiferhebelachse 77 liegt, wobei letztere konzentrisch in der Entnahmeschwenkachse 72 angeordnet ist. Die Entnahmeschwenkachse 72 ist drehfest mit dem Grundkörper 83 der Entnahmeeinheit 73 verbunden.

Wie insbesondere aus Fig. 2 ersichtlich ist, ändern die Entnahmeeinheiten 73 bei einem Umlauf des Entnahmerades 70 um die Entnahmeraddrehachse 71 ihre relative Position zum Entnahmerad 70. Während die Entnahmeeinheiten 73 in ihrer Grundstellung im wesentlichen radial bzw. strahlen- oder sternförmig bezüglich der Entnahmeraddrehachse 71 angeordnet sind, schwenken sie zu einem Zeitpunkt, da sie sich dem Vereinzelungsteller 60 nähern, im Umlaufsinn (Pfeilrichtung), so weit, bis eine Ebene, in der die erste und die zweite Greiferhebelachse 77,78 liegen, im wesentlichen senkrecht zur Oberfläche des Vereinzelungstellers 60 steht.

Zumindest während dieses Schwenkvorgangs des Grundkörpers 83 der Entnahmeeinheit 73 sind die Greiferhebel 75,76 geöffnet, oder werden auseinandergeschwenkt, so daß sich der Abstand zwischen der ersten Greiferbacke und der zweiten Greiferbacke 81 über den Außendurchmesser des zu Greiferenden Artikels 54 hinaus vergrößert.

In einer Drehstellung, in der die durch die erste Greiferhebelachse 77 und die zweite Greiferhebelachse 78 definierte Ebene im wesentlichen durch einen mittleren Bereich der Aufgaberingtasche 75 und des darin liegenden Artikels 54 hindurchgeht, schließen sich die beiden Greiferhebel 75,76 und ergreifen dadurch den Artikel 54. In dieser Stellung liegt vorzugsweise auch die Entnahmeraddrehachse 71 in dieser Ebene.

Während sich das Entnahmerad 70 in Pfeilrichtung (vgl. Fig. 2) weiter dreht, schwenkt der Grundkörper 83 der Entnahmeeinheit 73 im entgegengesetzten Sinne relativ zum Entnahmerad 70 um die Entnahmeschwenkachse 72, so daß der Grundkörper, absolut gesehen, eine Parallelverschiebung durchführt. Hierbei wird die durch die erste und zweite Greiferhebelachse definierte Ebene lediglich parallel versetzt, jedoch nicht bezüglich ihrer vorherigen Stellung (Übernahmestellung im Raum verdreht).

Erst, wenn der Artikel sicher aus der Aufgaberingtasche 65 herausgehoben worden ist, wird die Entnahmeeinheit 73 wiederum in Pfeilrichtung gegenüber dem Entnahmerad 70 verschwenkt, bis sie eine radiale Stellung (Grundstellung) zur Entnahmeraddrehachse 71 eingenommen hat. In dieser Stellung liegen wiederum Entnahmeraddrehachse 71 sowie die erste und die zweite Greiferhebelachse 77,78 in einer Ebene:

Wie in Fig. 2 dargestellt, befinden sich somit vorzugsweise immer die drei benachbarten Entnahmeeinheiten 73, die am nächsten dem Vereinzelungsteller 60 zugewandt sind, in paralleler Ausrichtung zueinander und in einer Stellung, indem die durch ihre Greiferhebelachsen definierte Ebene im wesentlichen senkrecht auf der Oberfläche des Vereinzelungstellers 60 liegt.

Durch eine derartige Anordnung, bei der die einzelnen Entnahmeeinheiten 73 bei jedem Umlauf des Entnahmerades 70 um die Entnahmeraddrehachse 71 um ihre jeweilige Entnahmeschwenkachse 72 vor bzw. zurückgedreht bzw. geschwenkt werden, wird es möglich, die Entnahmeeinheiten nahe genug aneinander anzuordnen, daß die jeweiligen Paare von Greiferhebeln benachbarte Entnahmeeinheiten die Artikel benachbarter Aufgaberingtaschen entnehmen können.

Hierdurch wird erfindungsgemäß eine Leistungssteigerung von auf 2300 Artikel pro Minute und darüber hinaus erreicht. Da die Winkelhalbierende zwischen den Greiferhebeln im geöffneten wie im geschlossenen Zustand im wesentlichen während des Ergreifens eines Artikels senkrecht zu seiner Auflagefläche (Aufgaberingtasche) steht, kann der Artikel erheblich produktschonender als bisher ergriffen werden.

Selbstverständlich ist es auch denkbar, anstelle der Greiferhebelanordnung zur Aufnahme der Artikel 54 von den Aufgaberingtaschen 65 eine Ansaugvorrichtung, beispielsweise in Form einer Ansaugdüse vorzusehen.

Hierbei wird die Ansaugdüse anstelle der Greiferhebelanordnung am Grundkörper 83 der Artikelaufnahmeeinheit 73 vorgesehen und fährt entsprechend der zuvor beschriebenen Art im Wege der Artikelaufnahme senkrecht von oben auf diesen herab, ergreift ihn und hebt ihn aus der Aufgaberingtasche an. Während dieses Vorgangs findet wiederum keine Drehung der Artikelaufnahmeeinheit relativ zur Oberfläche des Vereinzelungstellers statt.

Auch hierdurch ist es möglich, jedes Produkt der Reihe nach aus allen Taschen des Aufgaberings zu entnehmen.

Es sei angemerkt, daß die Entnahmeraddrehachse 71 zur Tellerdrehachse 61 seitlich versetzt angeordnet sein kann, in der zuvor beschriebenen Ausführungsform die Griffhebelpaare 75,76 radial und schwenkbar zur Entnahmeraddrehachse angeordnet sind und die Griffhebeldrehachsen 77, 78 zum Zeitpunkt der Entnahme eines Artikels übereinanderliegen.

Die Stromzuführkabel, Steuerleitungen und dergleichen der Vereinzelungseinrichtung 50 sowie die einer Verpackungsmaschine, zu der die Vereinzelungseinrichtung, vorzugsweise als Teil hiervon, gehört, sind in gestellseitigen Kanälen eines Gußgehäuses (Al) hiervon gekapselt geführt, wodurch Bodenfreiheit (zur Reinigung) ermöglicht wird.

## Patentansprüche

1. Vereinzelungseinrichtung einer Vorrichtung zum Verpacken kleinstückiger Artikel mit einem um eine Tellerdrehachse (61) drehbaren Vereinzelungsteller (60) und einem um eine Entnahmeraddrehachse (71) drehbaren Entnahmerad (70), an dem eine Mehrzahl von Entnahmeeinheiten (73) mit jeweils zumindest zwei um jeweils eine Greiferhebelachse (77,78) schwenkbaren Greiferhebeln (75,76) angeordnet sind, wobei an deren freien Ende jeweils eine Greiferbacke (80,81) zum Aufnehmen des Artikels (54) vorgesehen ist, **dadurch gekennzeichnet,** da**ß** jede Entnahmeeinheit (73) um eine eigene zur Entnahmeraddrehachse (71) parallele Entnahmeschwenkachse (72) bezüglich des Entnahmerades (70) drehbar ist, und daß ein Abstand zwischen der Greiferbacke (80,81) und der Greiferhebelachse (77,78) bei den einzelnen Greiferhebeln (75,76) unterschiedlich groß ausgebildet ist.

2. Vereinzelungseinrichtung nach Anspruch 1, **dadurch gekennzeichnet, daß** der Vereinzelungsteller (60) eine innere Vereinzelungsscheibe (62) und einen äußeren Aufgabering (63) aufweist, die mit jeweils unterschiedlichen und/oder stufenlos variablen Drehgeschwindigkeiten um die Tellerdrehachse (61) antreibbar sind.

3. Vereinzelungseinrichtung nach Anspruch 2, **dadurch gekennzeichnet, daß** in einem Bereich eines inneren Randes des Aufgaberings (63) eine ringförmige Führungswand (66) ausgebildet ist, die einen Übertritt von Artikeln (54) von der Vereinzelungsscheibe (62) auf den Aufgabering (63) verhindert.

4. Vereinzelungseinrichtung nach Anspruch 3, **dadurch gekennzeichnet, daß** in der Führungswand (66) Aussparungen (67) ausgebildet sind, die einen Übertritt von Artikeln (54) von der Vereinzelungsscheibe (62) zu auf dem Aufgabering (63) ausgebildeten Aufgaberingtaschen (65) ermöglichen.

5. Vereinzelungseinrichtung nach einem der Ansprüche 1 bis 4, **dadurch gekennzeichnet, daß** in einem Randbereich des Vereinzelungstellers (60) zumindest eine Störscheibeneinheit (55) angeordnet ist, zum Verhindern von Auftürmungen und/ oder Mauerbildungen der sich auf dem Vereinzelungsteller (60) befindenden Artikel (54).

6. Vereinzelungseinrichtung nach Anspruch 5, **dadurch gekennzeichnet, daß** die Störscheibeneinheit (55) eine Störscheibe (56) aufweist, die um eine Störscheibendrehachse (57) mit variabler Drehgeschwindigkeit antreibbar ist und die um eine Störscheibenneigeachse (58) zur Oberfläche der Vereinzelungsscheibe (62) hin und von dieser weg bewegbar ist.

7. Vereinzelungseinrichtung nach einem der Ansprüche 1 bis 6, **dadurch gekennzeichnet, daß** die Entnahmeeinheiten (73) im wesentlichen ringförmig an einer zur Entnahmeraddrehachse (71) normalen Stirnseite (74) des Entnahmerades (70) angeordnet sind.

8. Vereinzelungseinrichtung nach einem der Ansprüche 1 bis 7, **dadurch gekennzeichnet, daß** jede Entnahmeeinheit (73) einen drehfest mit ihrer Entnahmeschwenkachse (72) verbundenen Grundkörper (83) aufweist, an dem ein Paar von Greiferhebeln (75,76) drehbeweglich angeordnet ist.

9. Vereinzelungseinrichtung nach Anspruch 8, **dadurch gekennzeichnet,** da**ß** das Paar von Greiferhebeln (75,76) in einer Ebene normal zur Entnahmeraddrehachse (71) verschwenkbar ist, wobei die Greiferhebel (75,76) unterschiedlich lang ausgebildet sind.

10. Vereinzelungseinrichtung nach Anspruch 8 oder 9, **dadurch gekennzeichnet, daß** eine erste Greiferhebelachse (77), um die der erste Greiferhebel (75) verschwenkbar ist, eine zweite Greiferhebelachse (78), um die der zweite Greiferhebel (76) verschwenkbar ist, und die Entnahmeschwenkachse (72) einer Entnahmeeinheit (73) zueinander parallel sind und in einer Ebene liegen.

11. Vereinzelungseinrichtung nach Anspruch 10, **dadurch gekennzeichnet, daß** die erste Greiferhebelachse (77) und die Entnahmeschwenkachse (72) auf einer Linie liegen.

12. Vereinzelungseinrichtung nach Anspruch 10 oder 11, **dadurch gekennzeichnet, daß** die Greiferhebel (75,76) an ihren von den jeweiligen Greiferhebelachsen (77,78) entfernten Enden jeweils Greiferbackenaufnahmeeinrichtungen (79) aufweisen, an denen die Greiferbacken (80,81) auswechselbar befestigbar sind.

13. Vereinzelungseinrichtung nach Anspruch 12, **dadurch gekennzeichnet, daß** der Abstand der ersten Greiferhebelachse (77) zur Greiferbacke (80) des ersten Greiferhebels (75) im wesentlichen gleich ihrem Abstand zur Greiferbacke (81) des zweiten Greiferhebels (76) ist.

14. Vereinzelungseinrichtung nach einem der Ansprüche 8 bis 13, **dadurch gekennzeichnet, daß** die Grundkörper (83) benachbarter Entnahmeeinheiten (73) in einer Drehstellung des Entnahmerades (70), bei der sich die Entnahmeeinheiten (73) nahe an dem Vereinzelungsteller (60) befinden, im wesentlichen parallel ausgerichtet sind.

15. Vereinzelungseinrichtung nach einem der Ansprüche 8 bis 14, **dadurch gekennzeichnet, daß** die Grundkörper (83) benachbarter Entnahmeeinheiten (73) in einer Drehstellung des Entnahmerades (70), bei der sich die Entnahmeeinheiten (73) nahe an dem Vereinzelungsteller (60) befinden, im wesentlichen vertikal zur Oberfläche des Vereinzelungstellers (60) ausgerichtet sind.

16. Vereinzelungseinrichtung nach einem der Ansprüche 8 bis 15, **dadurch gekennzeichnet, daß** die Grundkörper (83) benachbarter Entnahmeeinheiten (73) in einer Drehstellung des Entnahmerades (70), bei der sich die Entnahmeeinheiten (73) in einem entfernteren Bereich bezüglich des Vereinzelungstellers (60) befinden, radial bzw. strahlenförmig bezüglich der Entnahmeraddrehachse (71) ausgerichtet sind.

17. Vereinzelungseinrichtung nach einem der Ansprüche 2 bis 16, **dadurch gekennzeichnet, daß** die Drehgeschwindigkeit des Aufgaberinges (63) und die Drehgeschwindigkeit des Entnahmerades (70) aufeinander abstimmbar sind, wobei in benachbarten Aufgaberingtaschen (65) des Aufgaberings (63) angeordnete Artikel (54) durch benachbarte Entnahmeeinheiten (73) des Entnahmerades (70) aufnehmbar sind.

18. Vereinzelungseinrichtung nach einem der Ansprüche 8 bis 17, **dadurch gekennzeichnet, daß** der erste Greiferhebel (75) und der zweite Greiferhebel (76) mit einander über eine Kupplungsvorrichtung, insbesondere eine Koppelstange (82) oder eine Zahnradverbindung entgegengesetzt drehbeweglich um ihre jeweiligen Greiferhebelachsen (77,78) verbunden sind.

19. Vereinzelungseinrichtung nach einem der Ansprüche 10 bis 18, **dadurch gekennzeichnet, daß** die Entnahmeschwenkachse (72) jeder Entnahmeeinheit (73) im wesentlichen rohrförmig ausgebildet ist, und die erste Greiferhebelachse (77) konzentrisch in dieser angeordnet ist.

20. Vereinzelungseinrichtung nach einem der Ansprüche 1 bis 19, **dadurch gekennzeichnet, daß** die Tellerdrehachse (61) und die Entnahmeraddrehachse (71) in einer Ebene liegen und ihre Verlängerungen einander schneiden.

21. Verfahren zum Vereinzeln von kleinstückigen Artikeln mit folgenden Schritten:
- Zuführen einer Vielzahl von Artikeln (54) zu einem sich drehenden Vereinzelungstelter (60);
- Einsortieren einzelner Artikel (54) in an einem Randbereich des Vereinzelungstellers (60) ausgebildeten Aufgaberingtaschen (65);
- Entnehmen der einsortierten Artikel (54) aus den Aufgaberingtaschen (65) durch schwenkbar an Entnahmeeinheiten (73) angeordnete Greiferhebel (75,76), wobei die Entnahmeeinheiten (73) an einem um eine Entnahmeraddrehachse (71) drehbaren Entnahmerad (70) angeordnet sind,
**dadurch gekennzeichnet, daß** die Entnahmeeinheiten (73) vor und nach dem Entnahmeschritt um eine zur Entnahmeraddrehachse (71) parallele Entnahmeschwenkachse (72) relativ zu dem Entnahmerad (70) verdreht werden.

22. Verfahren zum Vereinzeln von kleinstückigen Artikeln nach Anspruch 21, **dadurch gekennzeichnet, daß** das Verfahren mit Hilfe einer Vereinzelungseinrichtung (50) nach einem der Ansprüche 1 bis 20 durchgeführt wird.

23. Verfahren zum Vereinzeln von kleinstückigen Artikeln nach Anspruch 21 oder 22, **dadurch gekennzeichnet, daß** Artikel (54), die in benachbarten Aufgaberingtaschen (65) einsortiert worden sind, in dem Entnahmeschritt von benachbart an dem Entnahmerad (70) angeordneten Entnahmeeinheiten (70) entnommen werden.

## Claims

1. Singling equipment of a device for packaging small-size articles, comprising a singling plate (60), which is rotatable about a plate axis (61) of rotation, and a removing wheel (70), which is rotatable about a removing wheel axis (71) of rotation and at which a plurality of removing units (73) each with at least two gripper levers (75, 76) pivotable about a respective gripper lever axis (77, 78) are arranged, wherein a respective gripper jaw (80, 81 ) for receiving the article (54) is provided at each of the free ends of the levers, **characterised in that** each removing unit (73) is rotatable about an own removing pivot axis (72), which is parallel to the removing wheel axis (71) of rotation, with respect to the removing wheel (70) and that a spacing between the gripper jaw (80, 81) and the gripper lever axis (77, 78) is formed to be of different size in the case of the individual gripper levers (75, 76).

2. Singling equipment according to claim 1, **characterised in that** the singling plate (60) comprises an inner singling disc (62) and an outer feeder ring (63), which are drivable about the plate rotational axis (61) at respectively different and/or steplessly variable rotational speeds.

3. Singling equipment according to claim 2, **characterised in that** in a region of an inner edge of the feeder ring (63) there is formed an annular guide wall (66) which prevents overflow of articles (54) from the singling disc (62) to the feeder ring (63).

4. Singling equipment according to claim 3, **characterised in that** cut-outs (67), which enable overflow of articles (54) from the singling disc (62) to feeder ring pockets (65) formed on the feeder ring (63), are formed in the guide wall (66).

5. Singling equipment according to one of claims 1 to 4, **characterised in that** at least one disturbance disc unit (55) for preventing the articles (54) disposed on the singling plate (60) from piling up and/or forming walls, is arranged in an edge region of the singling plate (60).

6. Singling equipment according to claim 5, **characterised in that** the disturbance disc unit (55) comprises a disturbance disc (56) which is drivable at variable rotational speed about a disturbance disc axis (57) of rotation and which is movable about a disturbance disc inclined axis (58) towards and away from the surface of the singling disc (62).

7. Singling equipment according to one of claims 1 to 6, **characterised in that** the removing units (73) are arranged substantially annularly at an end face (74), which is normal to the removing wheel axis (71) of rotation, of the removing wheel (70).

8. Singling equipment according to one of claims 1 to 7, **characterised in that** each removing unit (73) comprises a base body (83) which is connected with its removing pivot axis (72) to be secure against rotation relative thereto and at which a pair of gripper levers (75, 76) is arranged to be rotationally movable.

9. Singling equipment according to claim 8, **characterised in that** the pair of gripper levers (75, 76) is pivotable in a plane normal to the removing wheel axis (71) of rotation, wherein the gripper levers (75, 76) are formed to be of different length.

10. Singling equipment according to claim 8 or 9, **characterised in that** a first gripper lever axis (77), about which the first gripper lever (75) is pivotable, a second gripper lever axis (78), about which the second gripper lever (76) is pivotable, and the removing pivot axis (72) of a removing unit (73) are parallel to one another and lie in one plane.

11. Singling equipment according to claim 10, **characterised in that** the first gripper lever axis (77) and the removing pivot axis (72) lie on a line.

12. Singling equipment according to claim 10 or 11, **characterised in that** the gripper levers (75, 76) have at their ends remote from the respective gripper lever axes (77, 78) respective gripper jaw receiving devices (79) at which the gripper jaws (80, 81) are fastenable to be exchangeable.

13. Singling equipment according to claim 12, **characterised in that** the spacing of the first gripper lever axis (77) from the gripper jaw (80) of the first gripper lever (75) is substantially equal to its spacing from the gripper jaw (81) of the second gripper lever (76).

14. Singling equipment according to one of claims 8 to 13, **characterised in that** the base bodies (83) of adjacent removing units (73) are aligned to be substantially parallel in a rotational setting of the removing wheel (70) in which the receiving units (73) are disposed adjacent to the singling plate (60).

15. Singling equipment according to one of claims 8 to 14, **characterised in that** the base bodies (83) of adjacent receiving units (73) are aligned substantially vertically to the surface of the singling plate (60) in a rotational setting of the receiving wheel (70) in which the removing units (73) are disposed adjacent to the singling plate (60).

16. Singling equipment according to one of claims 8 to 15, **characterised in that** the base bodies (83) of adjacent removing units (73) are oriented to be radial or radiating with respect to the removing wheel rotational axis (71) in a rotational setting of the removing wheel (70) in which the removing units (73) are disposed in a more remote region with respect to the singling plate (60).

17. Singling equipment according to one of claims 2 to 16, **characterised in that** the rotational speed of the feeder ring (63) and the rotational speed of the removing wheel (70) can be matched to one another, wherein articles arranged in adjacent feeder ring pockets (65) of the feeder ring (63) are receivable by adjacent removing units (73) of the removing wheel (70).

18. Singling equipment according to one of claims 8 to 17, **characterised in that** the first gripper lever (75) and the second gripper lever (76) are connected together by way of a coupling device, particularly a coupling rod (82) or a gearwheel connection, to be rotationally movable in opposite sense about their respective gripper lever axes (77, 78).

19. Singling equipment according to one of claims 10 to 18, **characterised in that** the removing pivot axis (72) of each removing unit (73) is constructed to be substantially tubular and the first gripper lever axis (77) is concentrically arranged therein.

20. Singling equipment according to one of claims 1 to 19, **characterised in that** the plate rotational axis (61) and the removing wheel rotational axis (71) lie in one plane and their prolongations intersect.

21. Method of singling small-size articles comprising the following steps:
- feeding a plurality of articles (54) to a rotating singling plate (60);
- sorting in individual articles (54) into feeder ring pockets (65) formed at an edge region of the singling plate (60);
- removing the sorted-in articles (54) from the feeder ring pockets (65) by gripper levers (75, 76) pivotably arranged at removing units (73), wherein the removing units (73) are arranged at a removing wheel (70) rotatable about a removing wheel rotational axis (71),
**characterised in that** the removing units (73) are rotated before and after the removing step about a removing pivot axis (72), which is parallel to the removing wheel rotational axis (71), relative to the removing wheel (70).

22. Method of singling small-size articles according to claim 21, **characterised in that** the method is carried out with the help of singling equipment (50) according to one of claims 1 to 20.

23. Method of singling small-size articles according to claim 21 or 22, **characterised in that** articles (54) which have been sorted into adjacent feeder ring pockets (65) are removed in the removing step by removing units (70) arranged adjacent to the removing wheel (70).

## Revendications

1. Dispositif de singularisation d'un dispositif d'emballage d'articles de petite taille comprenant un plateau de singularisation (60) pouvant tourner autour d'un axe de rotation du plateau (61) et une roue de prélèvement (70) pouvant tourner autour d'un axe de rotation (71) de la roue de prélèvement, sur laquelle sont disposés une pluralité d'éléments de prélèvement (73) ayant chacun au moins deux leviers de préhension (75, 76) pouvant pivoter chacun autour d'un axe (77, 78) de levier de préhension, une mâchoire de préhension (80, 81) pour la préhension de l'article (54) étant prévue sur l'extrémité libre des leviers de préhension, **caractérisé en ce que** chaque élément de prélèvement (73) peut tourner, par rapport à la roue de prélèvement (70), autour d'un axe propre de pivotement (72) de l'élément de prélèvement parallèle à l'axe de rotation (71) de la roue de prélèvement, et **en ce qu'**une distance entre la mâchoire de préhension (80, 81) et l'axe (77, 78) du levier de préhension est différente pour les leviers de préhension individuels (75, 76).

2. Dispositif de singularisation selon la revendication 1, **caractérisé en ce que** le plateau de singularisation (60) présente un disque de singularisation (62) interne et une couronne de distribution (63) externe, qui peuvent être entraînés chacun à des vitesses de rotation différentes et/ou variables en continu autour de l'axe de rotation (61) du plateau.

3. Dispositif de singularisation selon la revendication 2, **caractérisé en ce qu'**une paroi annulaire de guidage (66) est réalisée dans une zone d'un bord interne de la couronne de distribution (63), laquelle empêche le passage d'articles (54) du plateau de singularisation (62) sur la couronne de distribution (63).

4. Dispositif de singularisation selon la revendication 3, **caractérisé en ce que** des évidements (67) sont réalisés dans la paroi de guidage (66), lesquels permettent un passage des articles (54) du disque de singularisation (62) à des niches (65) de la couronne de distribution formées sur la couronne de distribution (63).

5. Dispositif de singularisation selon l'une des revendications 1 à 4, **caractérisé en ce qu'**au moins un élément de disque d'intercalation (55) est disposé dans une zone du bord du plateau de singularisation (60) pour empêcher la formation de piles et/ou de murs des articles (54) se trouvant sur le plateau de singularisation (60).

6. Dispositif de singularisation selon la revendication 5, **caractérisé en ce que** l'élément de disque d'intercalation (55) présente un disque d'intercalation (56) qui peut être entraîné autour d'un axe de rotation (57) du disque d'intercalation à une vitesse de rotation variable et qui est mobile autour d'un axe d'inclinaison (58) du disque d'intercalation par rapport à la surface du plateau de singularisation (62) pour s'en rapprocher et s'en éloigner.

7. Dispositif de singularisation selon l'une des revendications 1 à 6, **caractérise en ce que** les éléments de prélèvement (73) sont disposés essentiellement en cercle sur une face frontale (74) de la roue de prélèvement (70) normale à l'axe de rotation de la roue de prélèvement (71).

8. Dispositif de singularisation selon l'une des revendications 1 à 7, **caractérisé en ce que** chaque élément de prélèvement (73) présente un corps de base (83) relié sans pouvoir pivoter à son axe de pivotement (72) de l'élément de prélèvement, sur lequel est disposée une paire de leviers de préhension (75, 76) pouvant pivoter.

9. Dispositif de singularisation selon la revendication 8, **caractérisé en ce que** la paire de leviers de préhension (75, 76) peut pivoter dans un plan normal à l'axe de pivotement (71) de prélèvement, les leviers de prélèvement (75, 76) étant réalisés de différentes longueurs.

10. Dispositif de singularisation selon la revendication 8 ou 9, **caractérisé en ce qu'**un premier axe (77) de levier de préhension, autour duquel le premier levier de préhension (75) peut tourner, un deuxième axe (78) de levier de préhension, autour duquel le deuxième levier de préhension (76) peut tourner, et l'axe de pivotement (72) de prélèvement d'un élément de prélèvement (73) sont parallèles les uns aux autres et se trouvent sur le même plan.

11. Dispositif de singularisation selon la revendication 10, **caractérisé en ce que** le premier axe (77) de levier de préhension et l'axe de pivotement (72) de prélèvement sont situés sur une même ligne.

12. Dispositif de singularisation selon la revendication 10 ou 11, **caractérisé en ce que** les leviers de préhension (75, 76) présentent chacun, au niveau de leurs extrémités éloignées des axes (77, 78) de leviers de préhension respectifs, des dispositifs de prise des mâchoires de préhension (79), sur lesquels sont fixées les mâchoires de préhension (80, 81) de manière amovible.

13. Dispositif de singularisation selon la revendication 12, **caractérisé en ce que** la distance du premier axe (77) de levier de préhension à la mâchoire de préhension (80) du premier levier de préhension (75) est sensiblement égale à sa distance à la mâchoire de préhension (81) du deuxième levier de préhension (76).

14. Dispositif de singularisation selon l'une des revendications 8 à 13, **caractérisé en ce que** les corps de base (83) d'éléments de prélèvement (73) voisins sont sensiblement parallèles dans une position de rotation de la roue de prélèvement (70), dans laquelle les éléments de prélèvement (73) se trouvent à proximité du plateau de singularisation (60).

15. Dispositif de singularisation selon l'une des revendications 8 à 14, **caractérisé en ce que** les corps de base (83) d'éléments de prélèvement (73) voisins sont orientés essentiellement verticalement par rapport à la surface du plateau de singularisation (60) dans une position de rotation de la roue de prélèvement (70) dans laquelle les éléments de prélèvement (73) se trouvent à proximité du plateau de singularisation (60).

16. Dispositif de singularisation selon l'une des revendications 8 à 15, **caractérise en ce que** les corps de base (83) d'éléments de prélèvement (73) voisins sont orientés radialement ou en rayons par rapport à l'axe de rotation (71) de la roue de prélèvement dans une position de rotation de la roue de prélèvement (70) dans laquelle les éléments de prélèvement (73) se trouvent dans une zone plus éloignée par rapport au plateau de singularisation (60).

17. Dispositif de singularisation selon l'une des revendications 2 à 16, **caractérisé en ce que** la vitesse de rotation de la couronne de distribution (63) et la vitesse de rotation de la roue de prélèvement (70) peuvent être ajustées l'une par rapport à l'autre, les articles (54) disposés dans des niches voisines (65) de la couronne de distribution (63) pouvant être prélevés par des éléments de prélèvement (73) voisins de la roue de prélèvement (70).

18. Dispositif de singularisation selon l'une des revendications 8 à 17, **caractérisé en ce que** le premier levier de préhension (75) et le deuxième levier de préhension (76) sont reliés à l'aide d'un dispositif de couplage, en particulier une tige de couplage (82) ou un raccord à engrenage, de manière à pouvoir tourner dans des sens opposés l'un de l'autre autour de leurs axes (77, 78) de leviers de préhension respectifs.

19. Dispositif de singularisation selon l'une des revendications 10 à 18, **caractérisé en ce que** l'axe de pivotement (72) de prélèvement de chaque élément de prélèvement (73) est réalisé essentiellement sous forme tubulaire et **en ce que** le premier axe (77) de levier de préhension est disposé concentriquement dans celui-ci.

20. Dispositif de singularisation selon l'une des revendications 1 à 19, **caractérisé en ce que** l'axe de rotation (61) du plateau et l'axe de rotation (71) de la roue de prélèvement se trouvent sur un plan et que leurs prolongements se recoupent.

21. Procédé de singularisation d'articles de petite taille comprenant les étapes suivantes :
- aménage d'une pluralité d'articles (54) sur un plateau de singularisation (60) en rotation ;
- tri individuel des articles (54) dans des niches (65) de la couronne de distribution réalisées dans une zone du bord du plateau de singularisation (60) ;
- prélèvement des articles (54) triés individuellement à partir des niches (65) de la couronne de distribution par des leviers de préhension (75, 76) disposés de manière pivotante sur les éléments de préhension (73), les éléments de prélèvement (73) étant disposés sur une roue de prélèvement (70) pouvant tourner autour d'un axe de rotation (71) de roue de prélèvement,
**caractérisé en ce que** les éléments de prélèvement (73) tournent par rapport à la roue de prélèvement, avant et après l'étape de prélèvement, autour d'un axe de pivotement (72) de prélèvement parallèle à l'axe de rotation (71) de la roue de prélèvement.

22. Procédé de singularisation d'articles de petite taille selon la revendication 21, **caractérisé en ce que** le procédé est réalisé à l'aide d'un dispositif de singularisation (50) selon l'une des revendications 1 à 20.

23. Procédé de singularisation d'articles de petite taille selon la revendication 21 ou 22, **caractérisé en ce que** les articles (54), qui ont été triés dans des niches voisines: (65) de la couronne de distribution, sont prélevés dans l'étape de prélèvement par des éléments de prélèvement (73) voisins disposés sur la roue de prélèvement (70).
